# EUROPÄISCHE PATENTSCHRIFT

(11) **EP 1 580 122 B1**
(45) Veröffentlichungstag und Bekanntmachung des Hinweises auf die Patenterteilung: **29.01.2014**
(21) Anmeldenummer: 05005411.3
(22) Anmeldetag: 11.03.2005
(51) Int. Cl.: B64C 1/20, B64D 9/00

(54) **Frachtdeck**
Cargo deck
Pont à fret

(30) Priorität: 22.03.2004 DE 102004013909; 25.03.2004 DE 102004014745
(43) Veröffentlichungstag der Anmeldung: 28.09.2005
(73) Patentinhaber: Telair International GmbH, 83714 Miesbach (DE)
(72) Erfinder: Huber, Thomas, 83727 Schliersee (DE)
(74) Vertreter: Bohnenberger, Johannes

(56) Entgegenhaltungen:
- EP-A- 0 287 733
- DE-A1- 4 102 423
- US-A- 2 605 064
- US-A- 3 262 588
- US-A- 5 101 962

## Beschreibung

Die Erfindung betrifft ein Frachtdeck für einen Frachtraum eines Flugzeugs nach dem Oberbegriff des Patentanspruches 1.

Aus der DE 29 08 400 ist ein derartiges Frachtdeck für ein Großraumflugzeug bekannt, bei welchem insgesamt sechs Reihen von Montageprofilen in Längsrichtung des Flugzeugs montiert sind. In den Montageprofilen sind Tragrollen, Riegelelemente, PDUs und dergleichen Funktionselemente montiert. Zwischen den Montageprofilen werden Bodenelemente angebracht, also Bodenplatten ohne Funktionselemente oder auch Kugelmatten, also solche Bodenelemente, in denen dicht nebeneinander Kugelelemente montiert sind, auf denen Frachtgut in beliebige Richtungen verschoben werden kann.

Ein Frachtdeck ist ebenfalls bekannt aus der US 2,605,064 A1, die den nächstliegenden Stand der Technik darstellt und den Oberbegriff des Anspruchs 1 offenbart.

Beim Beladen eines solchen Frachtraumes werden durch eine Frachtraumtür hindurch Container oder Paletten hineingefahren, die dann innerhalb des Frachtraums auf den in den Montageprofilen angebrachten Rollen zu einer Stauposition gefahren und dort mit Hilfe von Riegelelementen, die gegebenenfalls ebenfalls in den Montageprofilen oder zwischen Montageprofilen auf dem Frachtdeck angebracht sind, verzurrt werden. Derartige Container oder Paletten sind genormt und der Querschnittsform des Frachtraumes angepasst. Hierbei sind im Wesentlichen zwei verschiedene Typen von Containern bzw. Paletten zu unterscheiden, nämlich solche, welche über die gesamte Breite des Frachtraumes reichen und solche, welche nur halb so breit wie der Frachtraum sind, so dass zwei derartige Container im Frachtraum nebeneinander verzurrt werden können.

Das bekannte Frachtdeck ist nun außerordentlich aufwändig gestaltet.

Der Erfindung liegt darum die Aufgabe zu Grunde, ein Frachtdeck der eingangs genannten Art dahin gehend weiterzubilden, dass bei verringertem Aufwand eine funktionell gute Benutzbarkeit gewährleistet ist.

Diese Aufgabe wird mit den Merkmalen des Anspruchs 1 gelöst.

Während beim bekannten Frachtdeck unterschiedliche Abstände der Montageprofile vorliegen, besteht ein wesentlicher Gedanke der Erfindung darin, dass absolut gleiche Abstände zwischen den Montageprofilen vorgesehen werden sollen. Dadurch ist gewährleistet, dass alle Bodenelemente, also sowohl Bodenplatten bzw. Floorpanels als auch Kugelmatten in nur einer Baugröße vorliegen und somit untereinander austauschbar sind. Dies bedeutet nicht nur eine vereinfachte Lagerhaltung, vielmehr können auch die Werkzeuge zur Herstellung derartiger Bodenelemente, die meist als Strangpressprofile ausgeführt sind, in einer geringeren Anzahl vorgesehen werden.

Eine weitere Vereinfachung ergibt sich dann, wenn die Montageprofile gleich breit sind. Auch hier ist wiederum eine verbesserte Austauschbarkeit und ein verminderter Aufwand bei der Herstellung erzielbar.

Die Montageprofile werden in einer ungeraden Anzahl, also 5, 7 oder 9 Montageprofile nebeneinander, vorzugsweise 7 Montageprofile vorgesehen, so dass ein einzelnes Montageprofil exakt in der Mitte des Frachtdecks verläuft. Dadurch lässt sich gegenüber dem eingangs genannten Stand der Technik eine erhebliche Vereinfachung und Gewichtsersparnis erzielen.

Im mittleren Montageprofil sind vorzugsweise Rolleneinheiten vorgesehen, die in eine erste und eine zweite Teilrolleneinheit unterteilt sind, wobei diese Teilrolleneinheiten derart voneinander unabhängig bewegbar sind, dass ein Frachtstück mit seinem Rand auf einer Teilrolleneinheit stehen und ein anderes Frachtstück mit seinem Rand auf der dazugehörigen anderen Teilrolleneinheit förderbar ist. Während also bei der bekannten Anordnung zwei gesonderte Rollenbahnen vorgesehen sind, wird bei der erfindungsgemäßen Ausgestaltung in einem einzigen Montageprofil durch eine besondere Rollenanordnung (Ausbildung als Teilrolleneinheiten) ein kompakter und dennoch funktionsfähiger Aufbau erzielt.

Üblicherweise sind in einem derartigen Frachtraum randseitige Führungsleisten vorgesehen, die auch in Form von einzelnen Rollenelementen ausgebildet sein können und dazu dienen, Container, die in den Frachtraum eingeschoben werden, von der Wand fern zu halten und zu führen. Vorzugsweise sind die an diesen seitlichen Führungsleisten oder Einzelrollen angebrachten Montageprofile in einem derartigen Abstand zu diesen seitlichen Führungsleisten oder Rollen angebracht, dass Container bei Anschlag an den Führungsleisten oder Rollen mit ihrem Randprofil über den Montageprofilen liegen. Auf diese Weise ist gewährleistet, dass die Container eine optimale Abstützung auch bei schmalen Rollen (und entsprechend schmalen Montageprofilen) erfahren.

Die Abstände zwischen den Montageprofilen sind vorzugsweise derart bemessen, dass zwei über die halbe Breite des Frachtraums sich erstreckende und gleichmäßig beladene Container (bei Boeing LD3-Container) mit ihren Schwerpunkten über einem Montageprofil liegen. Dadurch wird eine besonders stabile und (für die Container) sichere Abstützung gewährleistet.

Bevorzugte Ausführungsformen ergeben sich aus den Unteransprüchen und der nachfolgenden Beschreibung von Ausführungsbeispielen, die anhand von Abbildungen näher erläutert werden. Hierbei zeigen
- - Fig. 1: eine Draufsicht auf ein Frachtdeck,
- - Fig. 2: eine Vorderansicht auf ein Montageprofil mit Stützrollen und darauf abgestützten Containern, und
- - Fig. 3: eine perspektivische Ansicht der Anordnung nach Fig. 2.

In der nachfolgenden Beschreibung werden für gleiche und gleich wirkende Teile dieselben Bezugsziffern verwendet.

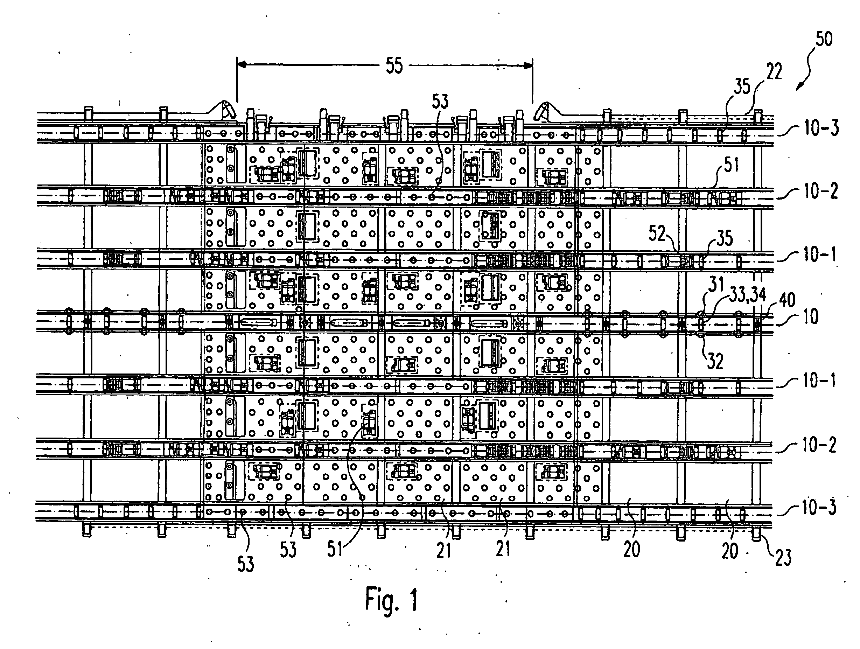

In Fig. 1 ist eine Draufsicht auf ein Frachtdeck 50 eines Großraumflugzeugs gezeigt. Dort sind insgesamt sieben Montageprofile 10 in identischen Abständen zueinander angebracht, zwischen denen Bodenplatten (Floorpanels) 20 und Kugelmatten 21 angebracht sind, welche alle dieselbe Breite haben, so dass sie aus einer einzigen Art von Hohlprofil (darum nur mit einem einzigen Werkzeug herstellbar) gemacht werden können.

An den Rändern des Frachtdecks 50 sind Führungsleisten 22, 23 mit entsprechenden Rollen vorgesehen.

In den Montageprofilen 10 sind (weiter unten näher beschriebene) Außenrollen 31, 32, mittlere Teilrollen 33, 34, ungeteilte Rollen 35, Riegel 40, 52 und PDUs 51 angebracht. Darüber hinaus sind in einem Türbereich 55, in welchem sich die Kugelmatten 21 befinden, um einen Container durch die Tür quer zu den Montageprofilen 10 mit ihren nur in einer Richtung befahrbaren Rollen auch drehen zu können, in den Montageprofilen 10 weitere Kugelelemente 53 in Montageschienen angebracht.

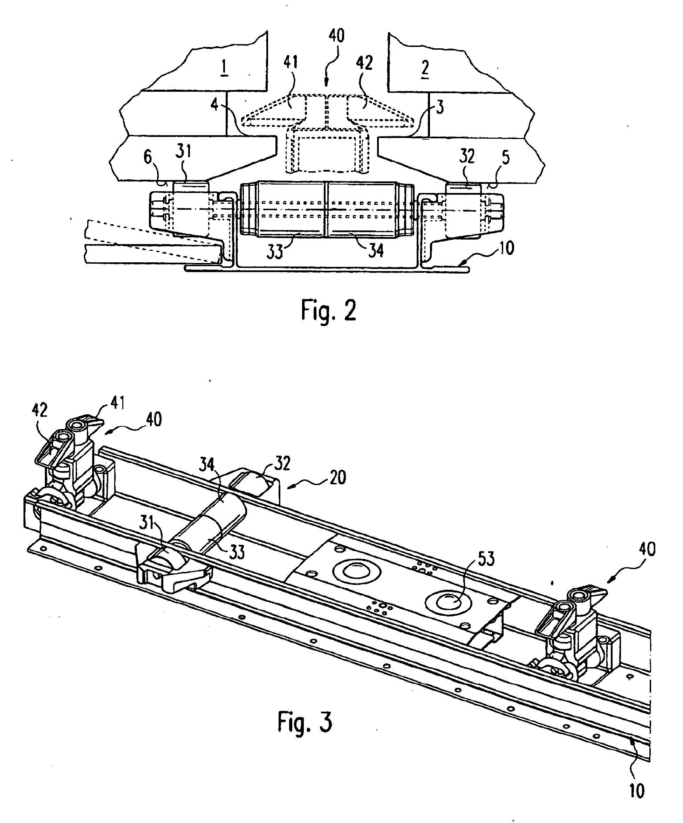

In Fig. 2 ist das mittlere Montageprofil 10 in einer Vorderansicht gezeigt zusammen mit zwei Containern 1, 2, deren Randprofile 5, 6 auf Außenrollen 31, 32 aufliegen, die vom Montageprofil 10 nach außen hervorstehen. Zwischen den Containern 1, 2 bzw. im Montageprofil 10 angebracht (wie dies in Fig. 3 leicht zu sehen ist) befinden sich Riegel 40, deren Klauen 41, 42 mit Verriegelungsrändern 3, 4 der Container 1, 2 in Eingriff gebracht werden können, um die Container gegenüber quer zur Flugzeuglängsachse gerichteten Bewegungen verriegeln zu können. Die Container 1, 2 liegen somit mit ihren steifsten Abschnitten, nämlich den Randprofilen 5, 6 auf den recht schmal ausgebildeten Rollen 31, 32 auf. Hierzu ist nur eine einzige Rollenbahn, gebildet aus dem Montageprofil 10, notwendig.

In Fig. 2 ist angedeutet, dass die mit dem Montageprofil 10 mittig gehaltene Rolle in zwei Teilrollen 33, 34 unterteilt sein kann. Insbesondere dann, wenn das mittlere Montageprofil 10 entsprechend breit ist, können die Außenrollen 31, 32 entfallen, wobei die Dimensionierung dann so vorgenommen ist, dass die mittleren Teilrollen 33, 34 sich bis unter die Randprofile 5, 6 der Container 1, 2 erstrecken. Bei der hier gezeigten Ausführungsform mit den Außenrollen 31, 32 wird allerdings der Vorteil erreicht, dass sämtliche Montageprofile 10 identisch ausgebildet sein können.

Aus Obigem geht hervor, dass ein wesentlicher Punkt der Erfindung darin liegt, einen symmetrischen, aus im Wesentlichen identischen Baugruppen bestehenden Aufbau für einen Frachtraumboden zu schaffen, was einerseits den Vorteil mit sich bringt, dass weniger Montageprofile benötigt werden (was zu Kosten- und Gewichtsersparnis führt) und andererseits nur wenige verschiedene Arten von Bauteilen vorgehalten werden müssen, zumindest was die "Halbzeuge" (Strangpressprofile) betrifft.

### Bezugszeichenliste

- 1: Container
- 2: Container
- 3: Verriegelungsrand
- 4: Verriegelungsrand
- 5: Randprofil
- 6: Randprofil
- 10: Montageprofil
- 20: Bodenplatte
- 21: Kugelmatte
- 22: Führungsleiste
- 23: Führungsleiste
- 31: 1. Außenrolle
- 32: 2. Außenrolle
- 33: 1. Mittlere Teilrolle
- 34: 2. Mittlere Teilrolle
- 35: Ungeteilte Rolle
- 40: Riegel
- 41: 1. Klaue
- 42: 2. Klaue
- 50: Frachtdeck
- 51: PDU
- 52: Riegel
- 53: Kugelelement
- 55: Türbereich

## Patentansprüche

1. Frachtdeck für einen Frachtraum eines Flugzeugs mit mehreren Montageprofilen (10), die in einer Längsrichtung des Flugzeugs angebracht und in denen Funktionselemente, nämlich Rollen (31 - 35) und/oder Kugelelemente (53 und/oder PDUs (51) montiert sind, und mit Bodenelementen,
wobei die Montageprofile (10) über eine Breite des Frachtraums gesehen identische Abstände derart voneinander aufweisen, dass identische Bodenelemente (20, 21) zwischen ihnen passgenau montierbar sind,
**dadurch gekennzeichnet, dass**
eine ungerade Anzahl von 5, 7 oder 9 Montageprofilen (10) vorgesehen ist, wobei im mittleren Montageprofil (10) mindestens ein Riegel (40) zum Eingreifen in Randprofile von wechselseitig angeordneten Containern (1, 2) angebracht ist.

2. Frachtdeck nach Anspruch 1,
**dadurch gekennzeichnet, dass**
die Montageprofile (10) gleich breit sind.

3. Frachtdeck nach Anspruch 1,
**dadurch gekennzeichnet, dass**
in einem mittleren Montageprofil (10) derart in eine erste und in eine zweite Teilrolleneinheit (31, 32; 33, 34) geteilte Rolleneinheiten angebracht sind, dass ein erstes Frachtstück (1) mit seinem Rand (5) auf einer Teilrolleneinheit (31, 33) stehen und ein anderes Frachtstück (2) mit seinem Rand (5) auf der dazugehörigen anderen Teilrolleneinheit (32, 34) förderbar ist.

4. Frachtdeck nach einem der vorhergehenden Ansprüche,
**dadurch gekennzeichnet, dass**
an seitlichen Führungsleisten (22, 23) des Frachtraumes liegende Montageprofile (10-3) in einem derartigen Abstand zu den seitlichen Führungsleisten (22, 23) angebracht sind, dass Container (1, 2) bei Anschlag an den Führungsleisten (22, 23) mit ihren Randprofilen (5, 6) über den Montageprofilen (10-3) liegen.

5. Frachtdeck nach einem der vorhergehenden Ansprüche,
**dadurch gekennzeichnet, dass**
die Abstände zwischen den Montageprofilen (10) derart bemessen sind, dass zwei über die halbe Breite des Frachtraumes sich erstreckende und gleichmäßig beladene Container (1, 2) mit ihren Schwerpunkten über einem Montageprofil (10-2) liegen.

## Claims

1. Cargo deck for a cargo hold of an aircraft, having a plurality of mounting profiles (10) which are installed in a longitudinal direction of the aircraft and in which functional elements, that is to say rollers (31-35) and/or ball elements (53) and/or PDUs (51), are mounted, and having floor elements,
wherein the mounting profiles (10), seen across a width of the cargo hold, are identically spaced from one another in such a way that identical floor elements (20, 21) can be mounted so as to fit exactly between them,
**characterised in that**
an uneven number of 5, 7 or 9 mounting profiles (10) is provided, there being installed in the central mounting profile (10) at least one locking element (40) for engaging edge profiles of containers (1, 2) arranged on either side.

2. Cargo deck according to claim 1,
**characterised in that**
the mounting profiles (10) are of the same width.

3. Cargo deck according to claim 1,
**characterised in that**
roller units, which are divided into a first sub-roller unit and a second sub-roller unit (31, 32; 33, 34), are installed in a central mounting profile (10) in such a way that a first cargo item (1) stands with its edge (5) on one sub-roller unit (31, 33) and another cargo item (2) can be conveyed with its edge (5) on the associated other sub-roller unit (32, 34).

4. Cargo deck according to any one of the preceding claims,
**characterised in that**
mounting profiles (10-3) that are adjacent to lateral guide bars (22, 23) of the cargo hold are installed spaced apart from the lateral guide bars (22, 23) in such a way that containers (1, 2), on making contact with the guide bars (22, 23), have their edge profiles (5, 6) located above the mounting profiles (103).

5. Cargo deck according to any one of the preceding claims,
**characterised in that**
the distances between the mounting profiles (10) are such that two uniformly loaded containers (1, 2) that extend over half the width of the cargo hold have their centres of gravity located above a mounting profile (10-2).

## Revendications

1. Pont à fret pour une soute d'un avion avec plusieurs profilés de montage (10), qui sont placés dans une direction longitudinale de l'avion et dans lesquels des éléments fonctionnels, tels que des galets (31-35) et/ou des éléments à bille (53) et/ou des PDU (51) sont montés, et avec des éléments de plancher, dans lequel les profilés de montage (10) présentent l'un par rapport à l'autre, en regardant suivant une largeur de la soute, des distances identiques, de telle manière que des éléments de plancher identiques (20, 21) puissent être montés en ajustement serré entre ceux-ci, **caractérisé en ce qu'**il est prévu un nombre impair de 5, 7 ou 9 profilés de montage (10), dans lequel au moins un verrou (40) est placé dans le profilé de montage central (10) pour s'engager dans des profilés de bord de conteneurs (1, 2)) disposés en alternance.

2. Pont à fret selon la revendication 1, **caractérisé en ce que** les profilés de montage (10) sont de largeur égale.

3. Pont à fret selon la revendication 1, **caractérisé en ce que** des unités de galets divisées en une première et une deuxième unités de galets partielles (31, 32; 33; 34) sont placées dans un profilé de montage central (10), de telle manière qu'une première pièce de fret (1) repose par son bord (5) sur une première unité de galets partielle (31, 33) et qu'une autre pièce de fret (2) soit transportable avec son bord (5) sur l'autre unité de galets partielle correspondante (32, 34).

4. Pont à fret selon l'une quelconque des revendications précédentes, **caractérisé en ce que** des profilés de montage (10.3) situés sur des barres de guidage latérales (22, 23) de la soute sont placés à une distance des barres de guidage latérales (22, 23) telle que des conteneurs (1, 2) soient situés avec leurs profilés de bord (5, 6) au-dessus des profilés de montage (10.3) lorsqu'ils viennent buter contre les barres de guidage (22, 23).

5. Pont à fret selon l'une quelconque des revendications précédentes, **caractérisé en ce que** les distances entre les profilés de montage (10) sont dimensionnées d'une manière telle que deux conteneurs (1, 2) s'étendant sur une demi-largeur de la soute et uniformément chargés soient situés avec leurs centres de gravité au-dessus d'un profilé de montage (10.2).
